# EUROPEAN PATENT APPLICATION

(11) **EP 4 759 587 A1**
(43) Date of publication of application: **17.06.2026**
(21) Application number: 25216928.9
(22) Date of filing: 19.11.2025
(51) Int. Cl.: B60K 1/00

(54) **ELECTRIC VEHICLE**

(30) Priority: 12.12.2024 JP 2024217603
(71) Applicant: Toyota Jidosha Kabushiki Kaisha, Toyota-shi, Aichi-ken 471-8571 (JP)
(72) Inventor: SHIOTA, Hidetomo, Toyota-shi, 471-8571 (JP); TANAKA, Masahiro, Toyota-shi, 471-8571 (JP); IWAMOTO, Masataka, Toyota-shi, 471-8571 (JP)
(74) Representative: D Young & Co LLP

(57) **Abstract**

An electric vehicle may include a plurality of wheels including a pair of front wheels; a drive unit including a motor configured to drive the pair of front wheels and a housing that houses the motor therein; and a steering gear unit located forward of the drive unit in a longitudinal direction of the electric vehicle, extending along a width direction of the electric vehicle, and configured to steer the pair of front wheels. A front surface of an end portion of the housing in the width direction may include a first inclined surface inclined outward in the width direction toward a rear portion of the electric vehicle, and the steering gear unit may include a first protrusion facing the first inclined surface of the housing from both a front side in the longitudinal direction and an outer side in the width direction.

## Description

### CROSS REFERENCE TO RELATED APPLICATION

This application claims priority to Japanese Patent Application No. 2024-217603 filed on December 12, 2024. The entire content of the priority application is incorporated herein by reference.

### TECHNICAL FIELD

The art disclosed herein relates to an electric vehicle.

### BACKGROUND ART

Japanese Patent Application Publication No. 2023-122982 describes an electric vehicle. This electric vehicle includes a plurality of wheels including a pair of front wheels, a drive unit including a motor, and a steering gear unit located forward of the drive unit in a longitudinal direction of the electric vehicle, extending along a width direction of the electric vehicle, and configured to steer the pair of front wheels.

### SUMMARY

Electric vehicles, such as the one described above, can achieve a reduction in a space required to house the steering gear unit and the drive unit by arranging the drive unit near the steering gear unit. However, if a portion protruding rearward is formed on the steering gear unit, this protruding portion may interfere with the drive unit. In this case, it is difficult to arrange the drive unit near the steering gear unit.

In view of the above, the disclosure herein provides a technology for arranging a drive unit near a steering gear unit.

The technology disclosed herein is embodied as an electric vehicle. In a first aspect, an electric vehicle may comprise a plurality of wheels comprising a pair of front wheels; a drive unit comprising a motor configured to drive the pair of front wheels and a housing that houses the motor therein; and a steering gear unit located forward of the drive unit in a longitudinal direction of the electric vehicle, extending along a width direction of the electric vehicle, and configured to steer the pair of front wheels. A front surface of an end portion of the housing in the width direction may comprise a first inclined surface inclined outward in the width direction toward a rear portion of the electric vehicle. The steering gear unit may comprise a first protrusion facing the first inclined surface of the housing from both a front side in the longitudinal direction and an outer

### BRIEF DESCRIPTION OF DRAWINGS

FIG. 1 is a diagram schematically illustrating a configuration of an electric vehicle 10 according to an embodiment.
FIG. 2 is a diagram illustrating a skeleton diagram of a front drive unit 18.
FIG. 3 is a plan view illustrating a positional relationship between the front drive unit 18 and a steering gear unit 76.
FIG. 4 is a side view illustrating the positional relationship between the front drive unit 18 and the steering gear unit 76.
FIG. 5 is a front view illustrating the positional relationship between the front drive unit 18 and the steering gear unit 76.
FIG. 6 is an exploded view of a housing 32 of the front drive unit 18.
FIG. 7 is a diagram schematically illustrating a configuration of the steering gear unit 76 with an intermediate shaft 82.

### DETAILED DESCRIPTION

The technology disclosed herein is embodied as an electric vehicle. In a first aspect, an electric vehicle may comprise a plurality of wheels comprising a pair of front wheels; a drive unit comprising a motor configured to drive the pair of front wheels and a housing that houses the motor therein; and a steering gear unit located forward of the drive unit in a longitudinal direction of the electric vehicle, extending along a width direction of the electric vehicle, and configured to steer the pair of front wheels. A front surface of an end portion of the housing in the width direction may comprise a first inclined surface inclined outward in the width direction toward a rear portion of the electric vehicle. The steering gear unit may comprise a first protrusion facing the first inclined surface of the housing from both a front side in the longitudinal direction and an outer side in the width direction.

In the electric vehicle above, the front surface of the housing of the drive unit comprises the first inclined surface. The first inclined surface is located on one end portion of the housing in the width direction and is inclined outward in the width direction toward the rear portion of the electric vehicle. Then, the steering gear unit comprises the first protrusion corresponding to the first inclined surface of the drive unit. The first protrusion faces the first inclined surface of the housing of the drive unit from both the front side and outer side in the width direction. In this configuration, the first protrusion of the steering gear unit overlaps the housing of the drive unit as viewed in the longitudinal direction and also as viewed in the width direction. That is, the first inclined surface of the drive unit is inclined toward the rear portion of the electric vehicle such that it does not interfere with the first protrusion of the steering gear unit. Thus, the drive unit can be located near the steering gear unit comprising the first protrusion.

In a second aspect according to the first aspect, the housing of the drive unit may comprise a housing body and a first cover attached to an end portion of the housing body in the width direction. In this case, the first inclined surface may be disposed on the first cover. In this configuration, even when the first inclined surface is located at an end portion of the housing, a motor and other components can be easily assembled into the housing body by removing the first cover from the housing body.

In a third aspect according to the first or second aspect, the steering gear unit may comprise a casing; a pinion shaft housed in the casing, rotatably supported by the casing, and connected to a steering shaft; and a rack shaft housed in the casing, supported by the casing such that the rack shaft is slidable along the width direction, and configured to move linearly in an axial direction of the rack shaft in response to rotational movement of the pinion shaft. In this case, the first protrusion of the steering gear unit may be a part of the casing of the steering gear unit that houses the pinion shaft. In this configuration, the part of the casing of the steering gear unit that houses the pinion shaft can protrude rearward.

In a fourth aspect according to any one of the first to third aspects, the front surface of other end portion of the housing in the width direction may comprise a second inclined surface inclined outward in the width direction toward the rear portion of the electric vehicle. In this configuration, the drive unit can be located near the steering gear unit regardless of whether the electric vehicle is a right-hand-drive vehicle or a left-hand-drive vehicle.

In a fifth aspect according to any one of the first to fourth aspects, the steering gear unit may comprise a casing; a motor housed in the casing; a rack shaft housed in the casing, supported by the casing such that the rack shaft is slidable along the width direction, and configured to move linearly in an axial direction of the rack shaft in response to rotational movement of the motor; and a transmission mechanism housed in the casing and disposed between the motor and the rack shaft. In this case, the first protrusion of the steering gear unit is a part of the casing of the steering gear unit that houses the transmission mechanism. In this configuration, the part of the casing of the steering gear unit that houses the transmission mechanism can protrude rearward.

In a sixth aspect according to any one of the first to fifth aspects, the front surface of other end portion of the housing in the width direction may comprise a second inclined surface inclined outward in the width direction toward the rear portion of the electric vehicle. In this case, the steering gear unit may comprise a second protrusion facing the second inclined surface of the housing from both the front side in the longitudinal direction and an outer side in the width direction. In this configuration, the second inclined surface of the drive unit is inclined such that it does not interfere with the second protrusion of the steering gear unit. Thus, the drive unit can be located near the steering gear unit comprising the second protrusion.

In a seventh aspect according to the sixth aspect, the housing may comprise a housing body, a first cover attached to an end portion of the housing body in the width direction, and a second cover attached to other end portion of the housing body in the width direction. In this case, the first inclined surface of the housing may be disposed on the first cover and the second inclined surface of the housing may be disposed on the second cover. In this configuration, even when the first inclined surface and the second inclined surface are disposed at the opposing end portions of the housing, the motor and other components can be easily assembled into the housing body by removing the first and second covers from the housing body.

In an eighth aspect according to the seventh aspect, the drive unit may further comprise an electric unit configured to control electric power supplied to the motor. In this case, the housing may further comprise a third cover attached to a rear surface of the first cover, a rear surface of the housing body, and a rear surface of the second cover. The electric unit may be located in a space defined by the first cover, the housing body, the second cover, and the third cover. This configuration allows a larger space for housing the electric unit compared to, for example, a configuration in which the third cover is attached only to the rear surface of the housing body.

In a ninth aspect according to any one of the sixth to eighth aspects, the steering gear unit may comprise a casing; a pinion shaft housed in the casing, rotatably supported by the casing, and connected to a steering shaft; a motor housed in the casing; a rack shaft housed in the casing, supported by the casing such that the rack shaft is slidable along the width direction, and configured to move linearly in an axial direction of the rack shaft in response to rotational movement of the pinion shaft and rotational movement of the motor; and a transmission mechanism housed in the casing and disposed between the motor and the rack shaft. In this case, the first protrusion of the steering gear unit may be a part of the casing of the steering gear unit that houses the pinion shaft, and the second protrusion of the steering gear unit may be another part of the casing of the steering gear unit that houses the transmission mechanism. In this configuration, the part of the casing of the steering gear unit that houses the pinion shaft and the part thereof that houses the transmission mechanism can protrude rearward.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved electric vehicles, as well as methods for using and manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

Referring to the drawings, an electric vehicle 10 according to an embodiment is described. The electric vehicle 10 is a so-called car. The electric vehicle 10 travels on road surfaces. The electric vehicle 10 is not limited to a vehicle driven/operated by a user and may be a vehicle remotely operated by an external device or an autonomous vehicle.

In the drawings, a direction FR corresponds to the front direction of the longitudinal direction (or front-rear direction) of the electric vehicle 10 (which may be referred to as "the vehicle longitudinal direction"), and a direction RR corresponds to the rear direction of the longitudinal direction of the electric vehicle 10. A direction LH corresponds to the left direction of the width direction (or right-left direction) of the electric vehicle 10 (which may be referred to as "vehicle width direction"), and a direction RH corresponds to the right direction of the width direction of the electric vehicle 10. A direction UP corresponds to the up direction of the height direction (or up-down direction) of the electric vehicle 10 (which may be referred to as "vehicle height direction"), and a direction DW corresponds to the down direction of the height direction of the electric vehicle 10.

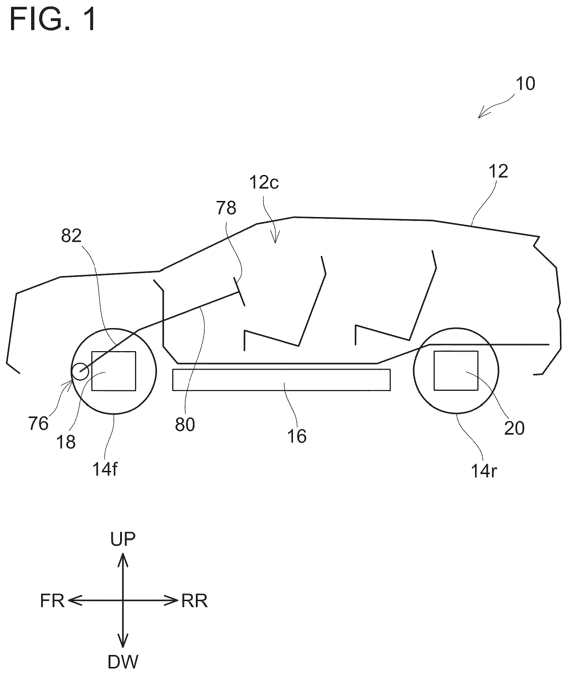

As illustrated in FIG. 1, the electric vehicle 10 comprises a vehicle body 12 and a plurality of wheels 14f, 14r. The vehicle body 12 comprises a cabin 12c which is a space for passengers. The plurality of wheels 14f, 14r is supported by the vehicle body 12. The plurality of wheels 14f, 14r is rotatably attached to the vehicle body 12. The plurality of wheels 14f, 14r includes a pair of front wheels 14f located in a front portion of the vehicle body 12 and a pair of rear wheels 14r located in a rear portion of the vehicle body 12. The front wheels 14f are coaxial with each other, and the rear wheels 14r are also coaxial with each other. The number of the wheels 14f, 14r is not limited to four. Further, the vehicle body 12 is constituted of a metal such as a steel material or an aluminum alloy, although this is merely an example.

As illustrated in FIG. 1, the electric vehicle 10 further comprises a battery pack 16, a front drive unit 18, and a rear drive unit 20. The battery pack 16 comprises, for example, a plurality of secondary battery cells and is repeatedly rechargeable with external electric power. The battery pack 16 supplies electric power to each of the front drive unit 18 and the rear drive unit 20. The battery pack 16 is located below the cabin 12c. The front drive unit 18 is located in the front portion of the vehicle body 12. The rear drive unit 20 is located in the rear portion of the vehicle body 12.

The front drive unit 18 drives the pair of front wheels 14f. The rear drive unit 20 drives the pair of rear wheels 14r. The front drive unit 18 and the rear drive unit 20 have the same configuration except for the difference in the wheels they drive. For this reason, only the configuration of the front drive unit 18 is described below and description for the configuration of the rear drive unit 20 is omitted.

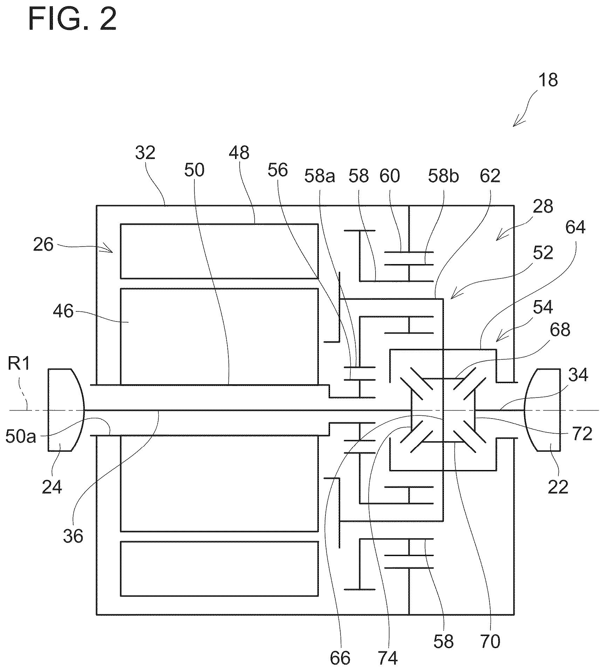

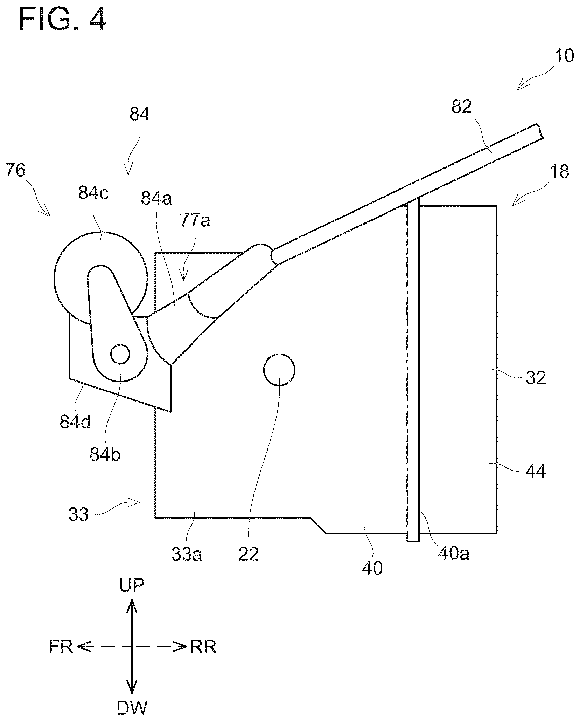

As illustrated in FIGS. 2 to 4, the electric vehicle 10 further comprises a left front drive shaft 22 and a right front drive shaft 24. The left front drive shaft 22 is located between the front drive unit 18 and one of the pair of front wheels 14f (i.e., the left front wheel 14f). The front drive unit 18 is connected to the left front wheel 14f via the left front drive shaft 22. The right front drive shaft 24 is located between the front drive unit 18 and the other of the pair of front wheels 14f (i.e., the right front wheel 14f). The front drive unit 18 is connected to the right front wheel 14f via the right front drive shaft 24.

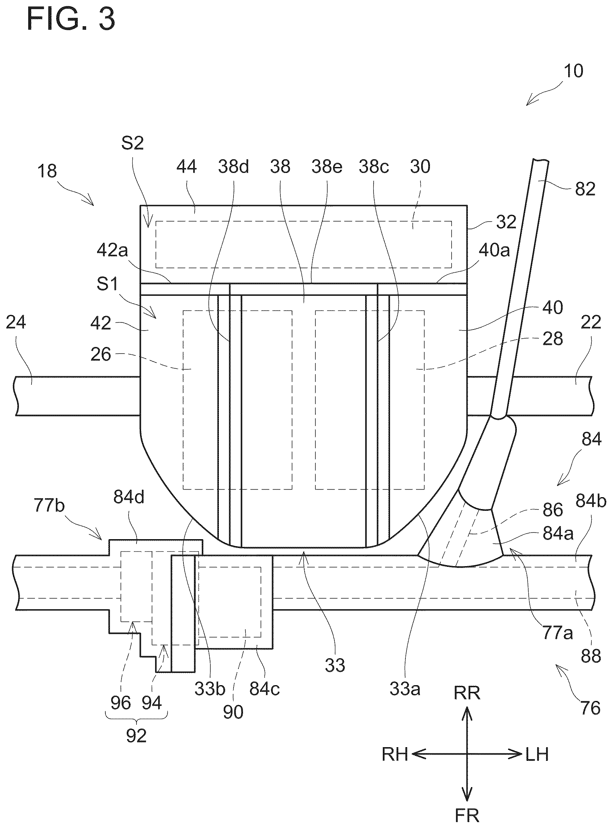

As illustrated in FIGS. 2 and 3, the front drive unit 18 comprises a motor 26, a gear mechanism 28, an electric unit 30, the housing 32, a left output shaft 34, and a right output shaft 36. The motor 26 is a traction motor for driving the pair of front wheels 14f. In this embodiment, the motor 26 is a motor actuated by three-phase AC power. The gear mechanism 28 distributes the drive power of the motor 26 to the pair of front wheels 14f. The motor 26 is connected to each of the left output shaft 34 and the right output shaft 36 via the gear mechanism 28. The left output shaft 34 is connected to the left front wheel 14f via the left front drive shaft 22. The right output shaft 36 is connected to the right front wheel 14f via the right front drive shaft 24. Thus, the motor 26 is connected to the pair of front wheels 14f via the gear mechanism 28, the output shafts 34, 36, and the front drive shafts 22, 24. Therefore, the motor 26 can drive the pair of front wheels 14f. In this embodiment, the motor 26 is coaxial with the gear mechanism 28.

The electric unit 30 controls electric power supplied to the motor 26. In this embodiment, the electric unit 30 comprises an inverter and controls electric power delivered between the battery pack 16 and the motor 26. The electric unit 30 is located rearward of the motor 26 and the gear mechanism 28. The electric unit 30 may further comprise a DC-DC converter.

As illustrated in FIGS. 2 to 6, the housing 32 is an enclosure member. The housing 32 houses the motor 26, the gear mechanism 28, and the electric unit 30 therein. The housing 32 comprises a housing body 38, a first cover 40, a second cover 42, and a third cover 44. The housing body 38 includes a first opening 38a and a second opening 38b. The first opening 38a is formed in one end surface 38c of the housing body 38 in the vehicle width direction (i.e., a left end surface 38c). The second opening 38b is formed in the other end surface 38d of the housing body 38 in the vehicle width direction (i.e., a right end surface 38d). Thus, the internal space of the housing body 38 is in communication with the outer space of the housing body 38 at each of the left end surface 38c and the right end surface 38d. The first cover 40 is attached to the left end surface 38c of the housing body 38 and closes the first opening 38a. The second cover 42 is attached to the right end surface 38d of the housing body 38 and closes the second opening 38b. The motor 26 and the gear mechanism 28 are located in a space S1 defined by the first cover 40, the housing body 38, and the second cover 42.

The third cover 44 is attached to a rear surface 40a of the first cover 40, a rear surface 38e of the housing body 38, and a rear surface 42a of the second cover 42. The electric unit 30 is located in a space S2 defined by the first cover 40, the housing body 38, the second cover 42, and the third cover 44.

As illustrated in FIG. 2, the motor 26 comprises a rotor 46, a stator 48, and a rotor shaft 50. The rotor 46 is supported against the housing 32 such that it is rotatable about a rotation axis R1. The stator 48 has a substantially tubular shape having the rotation axis R1 as its center axis. The stator 48 is fixed to an inner wall of the housing 32. The stator 48 is located radially outward of the rotor 46. The rotor shaft 50 is connected to the rotor 46 and rotates integrally with the rotor 46. The rotor shaft 50 comprises a through hole 50a extending in the direction of the rotation axis R1. The right output shaft 36 is located within the through hole 50a.

As illustrated in FIG. 2, the gear mechanism 28 comprises a planetary gear mechanism 52 and a differential gear mechanism 54. The planetary gear mechanism 52 reduces the rotational speed of the rotor shaft 50 of the motor 26. The differential gear mechanism 54 distributes the torque of the motor 26 transmitted via the planetary gear mechanism 52 to the pair of front wheels 14f. In this embodiment, the differential gear mechanism 54 is coaxial with the motor 26.

As illustrated in FIG. 2, the planetary gear mechanism 52 comprises a sun gear 56, a plurality of stepped pinion gears 58, a ring gear 60, and a carrier 62. The sun gear 56 is connected to the rotor shaft 50 of the motor 26 and rotates integrally with the rotor shaft 50. Each of the stepped pinion gears 58 includes a large-diameter pinion gear 58a and a small-diameter pinion gear 58b. The diameter of the small-diameter pinion gears 58b is smaller than the diameter of the large-diameter pinion gears 58a. The large-diameter pinion gears 58a are meshed with the sun gear 56. The small-diameter pinion gears 58b are meshed with the ring gear 60. Each of the stepped pinion gears 58 is meshed with the sun gear 56 and the ring gear 60 so that they can rotate about their own rotation axes and revolve around the sun gear 56. The ring gear 60 is fixed to the housing 32. The carrier 62 supports the plurality of stepped pinion gears 58 such that they are rotatable. Further, the carrier 62 is supported against the housing 32 such that it is rotatable about the rotation axis R1. Thus, the revolution of the plurality of stepped pinion gears 58 causes the carrier 62 to rotate about the rotation axis R1.

As illustrated in FIG. 2, the differential gear mechanism 54 comprises a differential case 64, a pinion shaft 66, differential pinion gears 68, 70, a left side gear 72, and a right side gear 74. The differential case 64 is supported against the housing 32 such that it is rotatable about the rotation axis R1. The differential case 64 is connected to the carrier 62 of the planetary gear mechanism 52 and rotates integrally with the carrier 62. The pinion shaft 66, the differential pinion gears 68, 70, the left side gear 72, and the right side gear 74 are housed in the differential case 64.

The pinion shaft 66 is connected to the differential case 64 and rotates integrally with the differential case 64. The pinion shaft 66 extends in a direction perpendicular to the direction of the rotation axis R1. The differential pinion gears 68, 70 are supported against the pinion shaft 66 such that they are rotatable about the axis of the pinion shaft 66. The left side gear 72 and the right side gear 74 are coaxial with each other and face each other. The left side gear 72 is meshed with each of the differential pinion gears 68, 70. The left side gear 72 is connected to the left output shaft 34. The right side gear 74 is meshed with each of the differential pinion gears 68, 70. The right side gear 74 is connected to the right output shaft 36.

Here, a power transmission flow in the above-described front drive unit 18 is described. The rotatory power of the rotor shaft 50 of the motor 26 is transmitted to the stepped pinion gears 58 through the rotation of the sun gear 56. The stepped pinion gears 58, once the power is transmitted thereto, revolve along the inner circumference of the ring gear 60 under a reaction force from the fixed ring gear 60 while rotating about their own rotation axes. The revolving motion of the stepped pinion gears 58 is output as the rotation of the carrier 62. In the differential case 64 which rotates integrally with the carrier 62, the power is transmitted from the differential pinion gears 68, 70 to the side gears 72, 74. The front drive shafts 22, 24 are rotated by the power transmitted to the side gears 72, 74. As described above, in this embodiment, among the components of the front drive unit 18, the sun gear 56 functions as an input element, the ring gear 60 functions as a reaction element, and the carrier 62 functions as an output element.

In addition to the motor 26, each of the front drive unit 18 and the rear drive unit 20 may further comprise another drive source such as an engine. Further, in addition to or instead of the battery pack 16, the electric vehicle 10 may comprise another power supply such as a fuel cell unit or a solar panel. Thus, the electric vehicle 10 is not limited to a battery-powered electric vehicle and may be another type of electric vehicle such as a hybrid vehicle, a fuel cell vehicle, or a solar-powered car.

As illustrated in FIG. 1, the electric vehicle 10 comprises a steering gear unit 76, a steering wheel 78, and a steering shaft 80 including an intermediate shaft 82. The steering gear unit 76 steers the pair of front wheels 14f. The steering gear unit 76 is located forward of the front drive unit 18 and extends in the vehicle width direction. The steering wheel 78 is located forward of the driver's seat and operated by the user. The steering shaft 80 transmits the user's steering action to the steering gear unit 76. The steering shaft 80 extends rearward from the steering gear unit 76. Since the electric vehicle 10 according to this embodiment is a left-hand drive vehicle, the steering shaft 80 extends rearward from a left portion of the steering gear unit 76. The rear end of the steering shaft 80 is connected to the steering wheel 78. The front end of the steering shaft 80 is connected to the steering gear unit 76. Thus, the steering shaft 80 can transmit the user's steering action, which is rotation of the steering wheel 78, to the steering gear unit 76. In another embodiment, the steering shaft 80 may not include the intermediate shaft 82 and may be comprised of a single shaft.

As illustrated in FIGS. 3 to 5 and 7, the steering gear unit 76 comprises a casing 84, a pinion shaft 86, a rack shaft 88, a motor 90, and a transmission mechanism 92. The casing 84 comprises a first casing 84a, a second casing 84b, a third casing 84c, and a fourth casing 84d. The casing 84 may be comprised of a single casing member or multiple casing members.

The pinion shaft 86 is housed in the first casing 84a and is rotatably supported by the first casing 84a. The pinion shaft 86 is connected to the steering shaft 80. In this embodiment, a rear end portion of the pinion shaft 86 is connected to the front end portion of the steering shaft 80. Thus, the pinion shaft 86 can rotate in response to the user's steering action on the steering wheel 78. A pinion gear portion 86a is formed on the outer surface of a front end portion of the pinion shaft 86. The rack shaft 88 is housed in the second casing 84b and supported by the second casing 84b such that the rack shaft 88 is slidable in the vehicle width direction. A rack gear portion 88a is formed on the outer surface of the rack shaft 88. The rack gear portion 88a is engaged with the pinion gear portion 86a. Thus, the rack shaft 88 can linearly move in the axial direction of the rack shaft 88 in response to the rotational movement of the pinion shaft 86. The linear movement of the rack shaft 88 is transmitted to the pair of front wheels 14f. Thus, the linear movement of the rack shaft 88 causes the pair of front wheels 14f to change course. Tie rods and knuckles may be located between the rack shaft 88 and the front wheels 14f.

The motor 90 is a drive source for the rack shaft 88. In this embodiment, the motor 90 is actuated by three-phase AC power. A rotation axis R2 of the motor 90 extends parallel to the rack shaft 88. The motor 90 is controlled by a control unit (not illustrated). The motor 90 can assist the user's steering action on the steering wheel 78 by moving the rack shaft 88. In case the electric vehicle 10 can travel autonomously, the rack shaft 88 can be moved without requiring the user's steering action on the steering wheel 78. The motor 90 is housed in the third casing 84c.

The transmission mechanism 92 is interposed between the motor 90 and the rack shaft 88. The transmission mechanism 92 is configured to convert the rotational movement of the motor 90 to the linear movement of the rack shaft 88. That is, the rotation of the motor 90 causes the rack shaft 88 to move along the axial direction. The configuration of the transmission mechanism 92 is not particularly limited. In this embodiment, the transmission mechanism 92 comprises a belt mechanism 94 and a linear motion mechanism 96, although this is merely an example. The belt mechanism 94 is interposed between the motor 90 and the linear motion mechanism 96 and transmits the rotational movement of the motor 90 to the linear motion mechanism 96. The linear motion mechanism 96 is interposed between the belt mechanism 94 and the rack shaft 88 and converts the rotational movement input through the belt mechanism 94 to the linear movement of the rack shaft 88. The belt mechanism 94 and the linear motion mechanism 96 are housed in the fourth casing 84d.

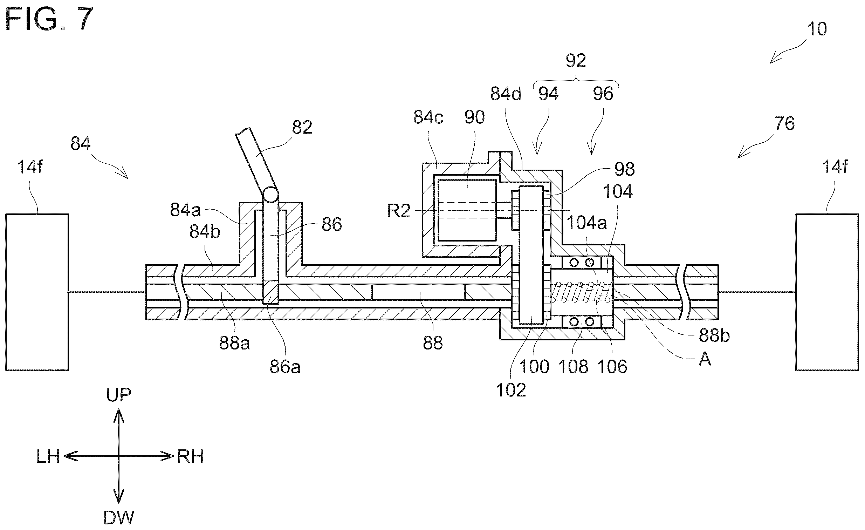

As illustrated in FIG. 7, the belt mechanism 94 comprises a pair of pullies 98, 100 and a belt 102. The belt 102 is placed around the pair of pullies 98, 100. The pair of pullies 98, 100 includes a drive pully 98 and a driven pully 100. The drive pully 98 is connected to the motor 90 and driven by the motor 90. The driven pully 100 is coaxial with the rack shaft 88. The diameter of the driven pully 100 is larger than the diameter of the drive pully 98, although this need not always be the case. Thus, the belt mechanism 94 also functions as a speed reducing mechanism.

As illustrated in FIG. 7, the linear motion mechanism 96 comprises a ball nut 104, a plurality of balls 106, and a bearing 108. The ball nut 104 has a cylindrical shape. The ball nut 104 is located to surround the rack shaft 88. The driven pulley 100 is coaxially fixed to the ball nut 104. Thus, the ball nut 104 rotates together with the rotation of the driven pully 100. A groove 104a is defined in the inner surface of the ball nut 104. A groove 88b is defined in the outer surface of the rack shaft 88. The plurality of balls 106 is located between the groove 104a of the ball nut 104 and the groove 88b of the rack shaft 88. Thus, the ball nut 104 and the rack shaft 88 are screwed together via the plurality of balls 106. The ball nut 104 is rotatably supported by the bearing 108 against the fourth casing 84d.

In the above-described transmission mechanism 92, the drive pully 98 rotates when the motor 90 rotates. The rotation of the drive pully 98 is transmitted to the driven pully 100 via the belt 102, causing the driven pully 100 and the ball nut 104 to rotate. Since the diameter of the driven pully 100 is larger than the diameter of the drive pully 98 in this embodiment, the rotational speed of the driven pully 100 and the ball nut 104 is slower than the rotational speed of the drive pully 98. The rotational speed of the drive pully 98 relative to the rotational speed of the driven pully 100 and the ball nut 104 varies depending on the ratio between the diameter of the drive pully 98 and the diameter of the driven pully 100. Since the ball nut 104 relatively rotates with respect to the rack shaft 88, the plurality of balls 106 interposed between the ball nut 104 and the rack shaft 88 is subjected to loads from the ball nut 104 and the rack shaft 88 and endlessly circulates in a rolling passage A. The endless circulation of the balls 106 converts the torque applied to the ball nut 104 to a force applied in the axial direction of the rack shaft 88. Thus, the rack shaft 88 linearly moves in the axial direction of the rack shaft 88 relative to the ball nut 104 in response to the rotational movement of the motor 90. This axial force applied to the rack shaft 88 works as an assist force to assist the pair of front wheels 14f to change course.

As illustrated in FIGS. 3 to 5, the steering gear unit 76 comprises a first protrusion 77a. The first protrusion 77a is mainly constituted by the first casing 84a and the pinion shaft 86 is housed therein, although this is merely an example. As illustrated in FIGS. 3 to 6, a front surface 33 of the housing 32 of the front drive unit 18 comprises a first inclined surface 33a. The first inclined surface 33a is located on one end portion of the housing 32 in the vehicle width direction (i.e., a left end portion) and is inclined outward in the vehicle width direction toward the rear portion of the electric vehicle. The first protrusion 77a is located corresponding to the first inclined surface 33a of the front drive unit 18. Specifically, the first protrusion 77a faces the first inclined surface 33a of the housing 32 of the front drive unit 18 from both the front side in the vehicle longitudinal direction and outer side in the vehicle width direction.

In the above configuration, the first protrusion 77a of the steering gear unit 76 overlaps the housing 32 of the front drive unit 18 as viewed in the vehicle longitudinal direction and also as viewed in the vehicle width direction. That is, the first inclined surface 33a of the front drive unit 18 is inclined toward the rear portion of the electric vehicle such that it does not interfere with the first protrusion 77a of the steering gear unit 76. Thus, the front drive unit 18 can be arranged near the steering gear unit 76 comprising the first protrusion 77a.

The first protrusion 77a of the steering gear unit 76 is not limited to a certain part of a component. As described, in this embodiment, the first protrusion 77a is a part of the casing 84 of the steering gear unit 76 and the pinion shaft 86 is housed therein. In this configuration, the part of the casing 84 of the steering gear unit 76 that houses the pinion shaft 86 can protrude rearward. Generally, the pinion shaft 86 often protrudes rearward in the steering gear unit 76. Thus, in the above configuration, the pinion shaft 86 can protrude rearward.

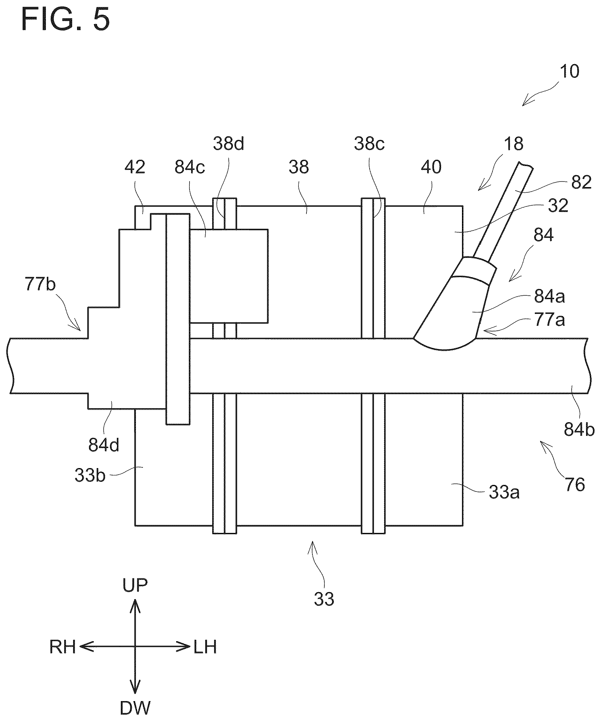

As illustrated in FIGS. 3 and 5, the steering gear unit 76 comprises a second protrusion 77b. The second protrusion 77b is mainly constituted by the fourth casing 84d and the transmission mechanism 92 is housed therein, although this is merely an example. As illustrated in FIGS. 3 to 6, the front surface 33 of the housing 32 of the front drive unit 18 comprises a second inclined surface 33b. The second inclined surface 33b is located on the other end portion of the housing 32 in the vehicle width direction (i.e., a right end portion) and is inclined outward in the vehicle width direction toward the rear portion of the electric vehicle. The second protrusion 77b is located corresponding to the second inclined surface 33b of the front drive unit 18. Specifically, the second protrusion 77b faces the second inclined surface 33b of the housing 32 of the front drive unit 18 from both the front side in the vehicle longitudinal direction and outer side in the vehicle width direction.

The second protrusion 77b of the steering gear unit 76 overlaps the housing 32 of the front drive unit 18 as viewed in the vehicle longitudinal direction and also as viewed in the vehicle width direction. That is, the second inclined surface 33b of the front drive unit 18 is inclined rearward such that it does not interfere with the second protrusion 77b of the steering gear unit 76. Thus, the front drive unit 18 can be arranged near the steering gear unit 76 comprising the second protrusion 77b.

The second protrusion 77b of the steering gear unit 76 is not limited to a certain part of a component. As described, in this embodiment, the second protrusion 77b is a part of the casing 84 of the steering gear unit 76 and the transmission mechanism 92 is housed therein. In this configuration, the part of the casing 84 of the steering gear unit 76 that houses the transmission mechanism 92 can protrude rearward.

In the above embodiment, the steering gear unit 76 comprises the first protrusion 77a and the second protrusion 77b, while the front surface 33 of the housing 32 of the front drive unit 18 comprises the first inclined surface 33a facing the first protrusion 77a and the second inclined surface 33b facing the second protrusion 77b. In this configuration, the part of the casing 84 of the steering gear unit 76 that houses the pinion shaft 86 and the part thereof that houses the transmission mechanism 92 can protrude rearward.

However, the steering gear unit 76 does not necessarily comprise both the first protrusion 77a and the second protrusion 77b. In another embodiment, the steering gear unit 76 may comprise only one of the first protrusion 77a and the second protrusion 77b. In other words, the steering gear unit 76 may comprise only one of the pinion shaft 86 and the transmission mechanism 92.

Even in case that the steering gear unit 76 comprises only the first protrusion 77a that houses the pinion shaft 86 therein, the front surface 33 of the housing 32 of the front drive unit 18 may comprise both the first inclined surface 33a and the second inclined surface 33b. In this configuration, the front drive unit 18 can be arranged near the steering gear unit 76 regardless of whether the electric vehicle 10 is a right-hand-drive vehicle or a left-hand-drive vehicle.

However, the front surface 33 of the housing 32 of the front drive unit 18 does not necessarily comprise both the first inclined surface 33a and the second inclined surface 33b. In another embodiment, the front surface 33 of the housing 32 of the front drive unit 18 may comprise only one of the first inclined surface 33a and the second inclined surface 33b. In this case, the one inclined surface of the front drive unit 18 may face a protrusion of the steering gear unit 76.

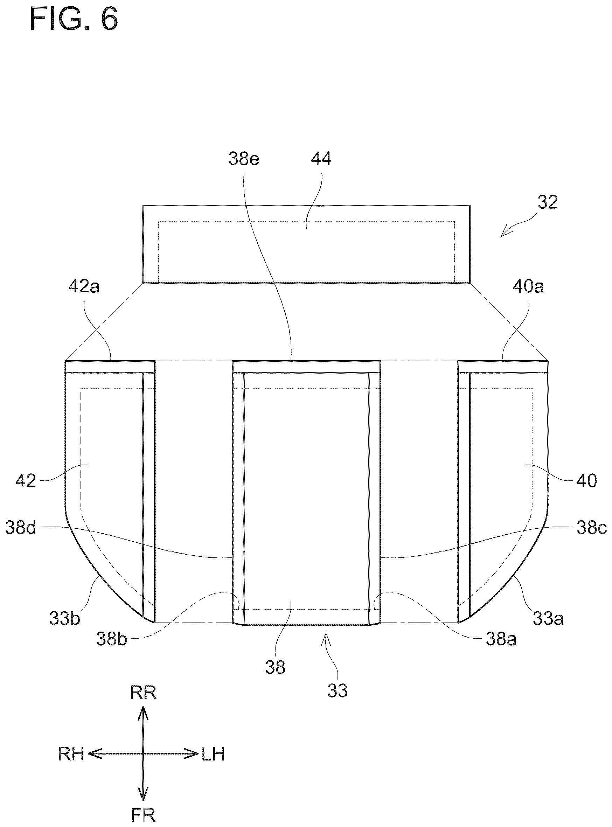

In the above embodiment, the first inclined surface 33a of the housing 32 is disposed on the first cover 40. In this configuration, even if the first inclined surface 33a is located on the end portion of the housing 32, the internal space of the housing body 38 is opened to the outside through the first opening 38a (see FIG. 6) by removing the first cover 40 from the housing body 38. Thus, the motor 26 and other components can be easily assembled into the housing body 38.

In addition to the above, in the above embodiment, the second inclined surface 33b of the housing 32 is disposed on the second cover 42. In this configuration, even when the first inclined surface 33a and the second inclined surface 33b are located on the opposing end portions of the housing 32, the internal space of the housing body 38 is opened to the outside through the first opening 38a and the second opening 38b (see FIG. 6) by removing the first cover 40 and the second cover 42 from the housing body 38. Thus, the motor 26 and other components can be easily assembled into the housing body 38.

In the above embodiment, the front drive unit 18 and the rear drive unit 20 have the common structure. However, the front drive unit 18 and the rear drive unit 20 do not necessarily have the common structure. That is, in another embodiment, the rear drive unit 20 may have any different structure from that of the front drive unit 18 as long as it can drive the pair of rear wheels 14r.

In the above embodiment, the electric vehicle 10 comprises the front drive unit 18 and the rear drive unit 20. However, the electric vehicle 10 does not necessarily comprise the rear drive unit 20. That is, in another embodiment, the electric vehicle 10 may comprise only the front drive unit 18.

## Claims

1. An electric vehicle (10), comprising:
a plurality of wheels (14f, 14r) comprising a pair of front wheels (14f);
a drive unit (18) comprising a motor (26) configured to drive the pair of front wheels (14f) and a housing (32) that houses the motor (26) therein; and
a steering gear unit (76) located forward of the drive unit (18) in a longitudinal direction of the electric vehicle (10), extending along a width direction of the electric vehicle (10), and configured to steer the pair of front wheels (14f),
wherein
a front surface (33) of an end portion of the housing (32) in the width direction comprises a first inclined surface (33a) inclined outward in the width direction toward a rear portion of the electric vehicle (10), and
the steering gear unit (76) comprises a first protrusion (77a) facing the first inclined surface (33a) of the housing (32) from both a front side in the longitudinal direction and an outer side in the width direction.

2. The electric vehicle according to claim 1, wherein
the housing (32) comprises a housing body (38) and a first cover (40) attached to an end portion of the housing body (38) in the width direction, and
the first inclined surface (33a) is disposed on the first cover (40).

3. The electric vehicle according to claim 1 or 2, wherein
the steering gear unit (76) comprises:
a casing (84);
a pinion shaft (86) housed in the casing (84), rotatably supported by the casing (84), and connected to a steering shaft (80); and
a rack shaft (88) housed in the casing (84), supported by the casing (84) such that the rack shaft (88) is slidable along the width direction, and configured to move linearly in an axial direction of the rack shaft (88) in response to rotational movement of the pinion shaft (86), and
the first protrusion (77a) of the steering gear unit (76) is a part of the casing (84) of the steering gear unit (76) that houses the pinion shaft (86).

4. The electric vehicle according to any one of claims 1 to 3, wherein the front surface (33) of other end portion of the housing (32) in the width direction comprises a second inclined surface (33b) inclined outward in the width direction toward the rear portion of the electric vehicle (10).

5. The electric vehicle according to any one of claims 1 to 4, wherein
the steering gear unit (76) comprises:
a casing (84);
a motor (90) housed in the casing (84);
a rack shaft (88) housed in the casing (84), supported by the casing (84) such that the rack shaft (88) is slidable along the width direction, and configured to move linearly in an axial direction of the rack shaft (88) in response to rotational movement of the motor (90); and
a transmission mechanism (92) housed in the casing (84) and disposed between the motor (90) and the rack shaft (88), and
the first protrusion (77a) of the steering gear unit (76) is a part of the casing (84) of the steering gear unit (76) that houses the transmission mechanism (92).

6. The electric vehicle according to any one of claims 1 to 5, wherein
the front surface (33) of other end portion of the housing (32) in the width direction comprises a second inclined surface (33b) inclined outward in the width direction toward the rear portion of the electric vehicle (10), and
the steering gear unit (76) comprises a second protrusion (77b) facing the second inclined surface (33b) of the housing (32) from both the front side in the longitudinal direction and an outer side in the width direction.

7. The electric vehicle according to claim 6, wherein
the housing (32) comprises a housing body (38), a first cover (40) attached to an end portion of the housing body (38) in the width direction, and a second cover (42) attached to other end portion of the housing body (38) in the width direction,
the first inclined surface (33a) of the housing (32) is disposed on the first cover (40), and the second inclined surface (33b) of the housing (32) is disposed on the second cover (42).

8. The electric vehicle according to claim 7, wherein
the drive unit (18) further comprises an electric unit (30) configured to control electric power supplied to the motor (26),
the housing (32) further comprises a third cover (44) attached to a rear surface (40a) of the first cover (40), a rear surface (38e) of the housing body (38), and a rear surface (42a) of the second cover (42), and
the electric unit (30) is located in a space (S2) defined by the first cover (40), the housing body (38), the second cover (42), and the third cover (44).

9. The electric vehicle according to any one of claims 6 to 8, wherein
the steering gear unit (76) comprises:
a casing (84);
a pinion shaft (86) housed in the casing (84), rotatably supported by the casing (84), and connected to a steering shaft (80);
a motor (90) housed in the casing (84);
a rack shaft (88) housed in the casing (84), supported by the casing (84) such that the rack shaft (88) is slidable along the width direction, and configured to move linearly in an axial direction of the rack shaft (88) in response to rotational movement of the pinion shaft (86) and rotational movement of the motor (90); and
a transmission mechanism (92) housed in the casing (84) and disposed between the motor (90) and the rack shaft (88),
the first protrusion (77a) of the steering gear unit (76) is a part of the casing (84) of the steering gear unit (76) that houses the pinion shaft (86), and
the second protrusion (77b) of the steering gear unit (76) is another part of the casing (84) of the steering gear unit (76) that houses the transmission mechanism (92).
